# EUROPEAN PATENT SPECIFICATION

(11) **EP 4 487 304 B1**
(45) Date of publication and mention of the grant of the patent: **16.09.2026**
(21) Application number: 22812999.5
(22) Date of filing: 04.03.2022
(51) Int. Cl.: G06V 20/54, G06T 7/80

(54) **ELEVATION MAP SYSTEMS AND METHODS FOR TRACKING OF OBJECTS**
HÖHENKARTENSYSTEME UND VERFAHREN ZUR VERFOLGUNG VON OBJEKTEN
SYSTÈMES ET PROCÉDÉS DE CARTE D'ÉLÉVATION POUR LE SUIVI D'OBJETS

(43) Date of publication of application: 08.01.2025
(73) Proprietor: FLIR Systems Trading Belgium BV, 2321 Meer (BE); Teledyne FLIR, LLC, Thousand Oaks, CA 91360 (US)
(72) Inventor: JANSSENS, Koen, Thousand Oaks, California 91360 (US); INGELS, Ruben, Thousand Oaks, California 91360 (US)
(74) Representative: Murgitroyd & Company
(86) International application number: PCT/US2022/070981
(87) International publication number: WO 2023/167744

(56) References cited:
- SOCHOR JAKUB ET AL: "Traffic surveillance camera calibration by 3D model bounding box alignment for accurate vehicle speed measurement", COMPUTER VISION AND IMAGE UNDERSTANDING, ACADEMIC PRESS, US, vol. 161, 1 June 2017 (2017-06-01), pages 87 - 98, XP085170011, ISSN: 1077-3142, DOI: 10.1016/J.CVIU.2017.05.015
- ZHANG SHANXIN ET AL: "Vehicle global 6-DoF pose estimation under traffic surveillance camera", ISPRS JOURNAL OF PHOTOGRAMMETRY AND REMOTE SENSING, AMSTERDAM [U.A.] : ELSEVIER, AMSTERDAM, NL, vol. 159, 26 November 2019 (2019-11-26), pages 114 - 128, XP085961741, ISSN: 0924-2716, [retrieved on 20191126], DOI: 10.1016/J.ISPRSJPRS.2019.11.005

## Description

### TECHNICAL FIELD

The present application relates generally to traffic infrastructure systems and, more particularly for example, to systems and methods associated with elevation map subsystems for improved three-dimensional tracking of objects in a traffic or security monitoring scene.

### BACKGROUND

Traffic control systems use sensors to detect vehicles and traffic to help mitigate congestion and improve safety. These sensors range in capabilities from the ability to simply detect vehicles in closed systems (e.g., provide a simple contact closure to a traffic controller) to those that can classify (e.g., distinguish between bikes, cars, trucks, etc.) and monitor the flows of vehicles and other objects (e.g., pedestrians, animals). For instance, cameras, loop detectors, radar, or other sensors may be used to detect the presence, location and/or movement of one or more vehicles. Some systems may transform the sensor input to real-world coordinates, such as through a mathematical model that converts pixels in the image plane to points in Cartesian sensor-centered world coordinates.

However, this mathematical model assumes a flat ground plane in relation to the sensor. In reality, this is not always the case, and the actual ground plane can be sloped in any direction, especially in hilly and mountainous areas. This discrepancy between the mathematical model and reality can lead to inaccurate tracking (e.g., location, speed, and heading), with the tracking system using incorrect location points in the Cartesian world. In view of the foregoing, there is a continued need for improved traffic control systems and methods that more accurately detect and monitor traffic.

Sochor Jakub et al.: "Traffic surveillance camera calibration by 3D model bounding box alignment for accurate vehicle speed measurement," Computer Vision and Image Understanding, Academic Press, US., vol. 161, pages 87 - 98, June 1, 2017 discloses a camera calibration method for traffic surveillance based on two detected vanishing points and an automatic scene scale inference method based on matching bounding boxes of rendered 3D models of vehicles with detected bounding boxes in the image.

### SUMMARY

Systems and methods for improved three-dimensional tracking of objects in a traffic or security monitoring scene are disclosed herein.

According to a first aspect, there is provided a system according to claim 1.

According to a second aspect, there is provided a method according to claim 9.

The scope of the present disclosure is defined by the claims. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Aspects of the disclosure and their advantages can be better understood with reference to the following drawings and the detailed description that follows. It should be appreciated that like reference numerals are used to identify like elements illustrated in one or more of the figures, where showings therein are for purposes of illustrating embodiments of the present disclosure and not for purposes of limiting the same. The components in the drawings are not necessarily to scale, emphasis instead being placed upon clearly illustrating the principles of the present disclosure.
FIG. 1 is a block diagram illustrating an operation of an object tracking system, in accordance with one or more embodiments.
FIG. 2 illustrates an example object localization process through deep learning, in accordance with one or more embodiments.
FIG. 3 is an example thermal image and CNN object localization results, in accordance with one or more embodiments.
FIG. 4 illustrates a process of transforming sensor data into world coordinates, in accordance with one or more embodiments.
FIG. 5 illustrates a calibration model assuming a flat ground plane in relation to extrinsic parameters of an image sensor, in accordance with one or more embodiments.
FIG. 6 illustrates a comparison between an actual location of a vehicle and the location determined by the calibration model for a downhill situation, in accordance with one or more embodiments.
FIG. 7 illustrates a comparison between an actual location of a vehicle and the location determined by the calibration model for an uphill situation, in accordance with one or more embodiments.
FIG. 8 illustrates a downhill situation similar to FIG. 6, but from a top view of the scene, in accordance with one or more embodiments.
FIG. 9 illustrates a process of transforming sensor data into world coordinates using an elevation map, in accordance with one or more embodiments.
FIG. 10 illustrates an example elevation map of a scene, in accordance with one or more embodiments.
FIG. 11 illustrates example transformations of bounding boxes into three-dimensional images, in accordance with one or more embodiments.
FIG. 12 is an example image from a tracking system working with an image sensor, in accordance with one or more embodiments.
FIG. 13 illustrates a process of comparing an input bounding box from an object detector to a projected bounding box, in accordance with one or more embodiments.
FIG. 14 illustrates example images of the input bounding box and the projected bounding box for comparison, in accordance with one or more embodiments.
FIG. 15 illustrates a comparison between an expected size of a vehicle and a projected size of the vehicle, in accordance with one or more embodiments.
FIG. 16 illustrates the projection of the vehicle brought closer to the image sensor for the comparison, in accordance with one or more embodiments.
FIG. 17 illustrates the same comparison as FIG. 16, but from a top view of the scene, in accordance with one or more embodiments.
FIG. 18 illustrates an example intelligent transportation system, in accordance with one or more embodiments.

### DETAILED DESCRIPTION

The present disclosure provides traffic infrastructure systems and methods with improved object tracking. In various embodiments, a tracking system may incorporate an elevation map to accurately represent the 3D camera scene. The elevation map may cover the entire area of the scene and hold for one or more (e.g., each) locations in the area the difference between the real ground height and the theoretical ground plane used in a mathematical model. The elevation map may be used to map coordinates in a 2D ground plane to coordinates in an actual 3D ground plane. As a result, the tracking system can handle sloped terrain in any direction. In embodiments, the elevation map may be automatically determined without any user interaction or manual steps required. In this manner, the tracking system may automatically calibrate itself for the most accurate tracking output.

The sensor input from an image sensor (e.g., a visual or thermal sensor) may go through a deep learning system to localize objects of interest in the image plane, such as defining a 2D bounding box around the objects of interest. The location of an object in the image plane may be transformed to Cartesian world coordinates using a mathematical model and the coordinates mapped to a flat ground plane. The tracking system may provide an estimation of the real dimensions of the object in the world on the ground plane. These 3D dimensions may be converted back to a 2D bounding box (e.g., from the deep learning system). On a non-flat ground plane, there may be a size discrepancy between both 2D bounding boxes, which provides information regarding terrain height at that specific location, such as whether the terrain height is higher or lower than the flat ground plane in the mathematical model.

This information may be gathered over multiple locations in the camera scene (e.g., from multiple objects, as the object traverses the camera scene, etc.). Such information may be used in an optimization algorithm to find the most ideal terrain height in each location, such that both 2D bounding boxes match up correctly. As a result, the estimated elevation map may be used to map flat ground plane coordinates to non-flat ground plane coordinates.

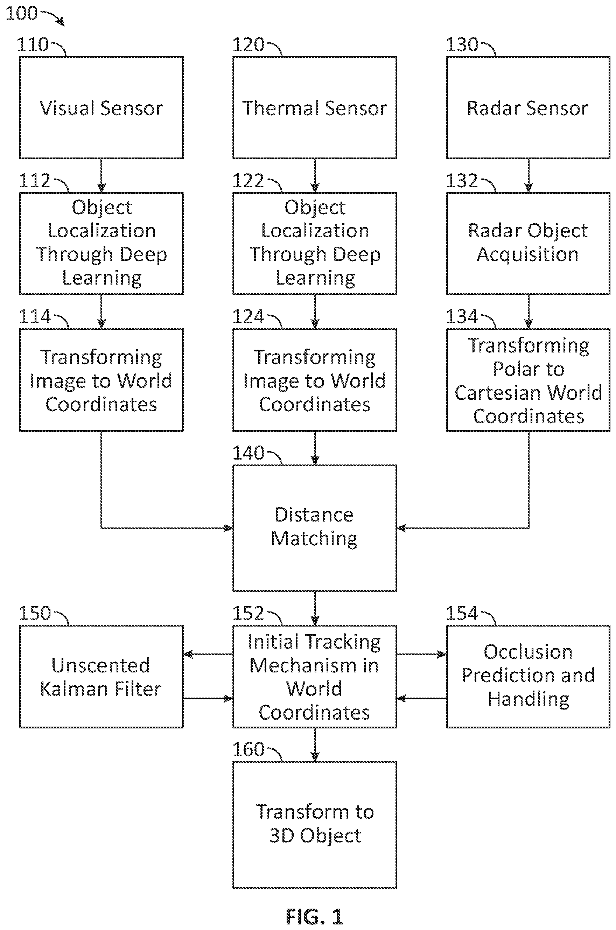

Referring to FIG. 1, an operation of a tracking system will be described in accordance with one or more embodiments. A tracking system 100 may be implemented as part of a traffic infrastructure system or other system with fixed sensors that are used to track vehicles and other objects through an area. The tracking system 100 includes one or more sensors (e.g., a plurality of sensors), such as a visual sensor 110, a thermal sensor 120 and a radar sensor 130. Other sensors and sensor combinations may also be used. The visual sensor 110 may include an image capture device (e.g., a camera) configured to capture visible light images of a scene. The captured images are provided to an object localization algorithm 112, which may include a deep learning model trained to identify one or more objects within a captured image. The object location within the captured images are transformed to world coordinators, such as the world coordinates of a sensor through a transformation algorithm 114.

The thermal sensor 120 may include a thermal image capture device (e.g., a thermal camera) configured to capture thermal images of the scene. The captured thermal images are provided to an object localization algorithm 122, which may include a deep learning model trained to identify one or more objects within a captured thermal image. The object location within the captured thermal images are transformed to world coordinators through a transformation algorithm 124.

The radar sensor 130 may include a transmitter configured to produce electromagnetic pulses and a receiver configured to receive reflections of the electromagnetic pulses off of objects in the location of the scene. The captured radar data is provided to an object localization algorithm 132, which may include a background learning algorithm that detects movement in the captured data and/or a deep learning model trained to identify one or more objects within the radar data. The object location within the captured radar data are transformed to world coordinators through a transformation algorithm 134.

World coordinates of the objects detected by the various sensors 110, 120 and 130 are provided to a distance matching algorithm 140. The distance matching algorithm 140 matches objects detected by one or more sensors based on location and provide the synthesized object information to an object tracking system 152 that is configured to track detected objects using world coordinates. A Kalman Filter 150 (e.g., an unscented Kalman filter) is used to provide a prediction of location based on historic data and previous three-dimensional location of the object. An occlusion prediction and handling algorithm 154 may also be used to track objects that are occluded from detection of one or more sensors. Finally, the tracked objects are transformed to three-dimensional object representations (e.g., through a 3D bounding box having a length, width and height in the world coordinates) through a 3D object transformation process 160.

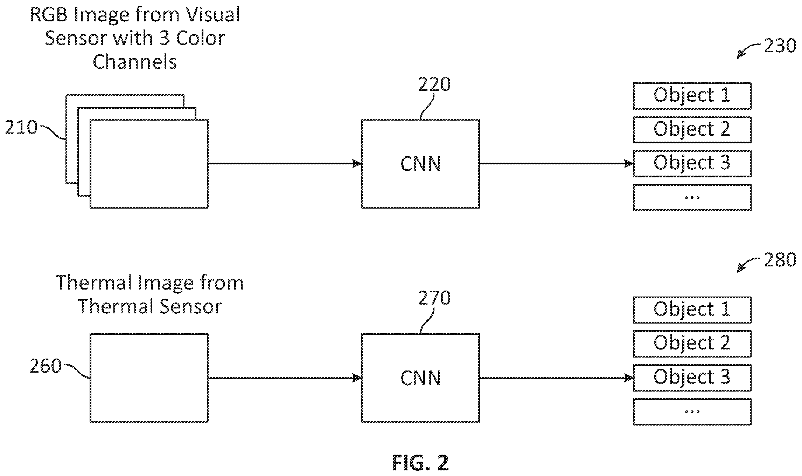

Referring to FIG. 2, embodiments of object localization through deep learning will now be described. Convolutional Neural Networks (CNNs) can be used to acquire the locations of objects in an image. The input of a CNN is the image and all its pixels, such as an RGB image 210 captured from a visible light sensor or a thermal image 260 captured from an infrared sensor. The output of the CNN (e.g., CNN 220 or CNN 270) is a list of bounding boxes 230 and 280 associated with each detected object, including the class type (e.g., car, truck, person, cyclist, ...) and a confidence level of how accurate the CNN sees the particular object of that class. The CNN is trained to be able to recognize the different objects to be detected for the particular environment and may be implemented using a variety of architectures that are capable of outputting bounding boxes for the detected objects.

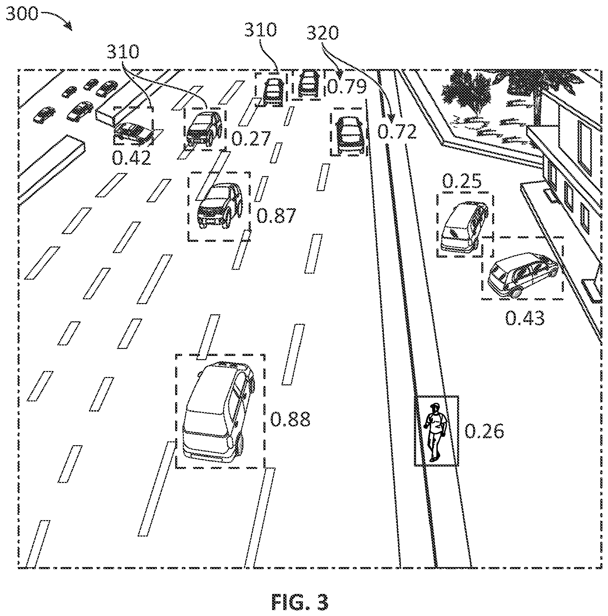

FIG. 3 illustrates an example operation of a CNN that is able to detect the locations of all vehicles in the scene. A thermal image 300 of a traffic location is processed through a trained CNN to identify vehicles in the thermal image 300. Each detected vehicle is identified by a bounding box (e.g., bounding boxes 310). The number next to each bounding box represents the confidence 320 associated with that bounding box and the color and/or style (e.g., solid lines, dashed lines, dotted lines) of the bounding boxes can be selected to represent different class types.

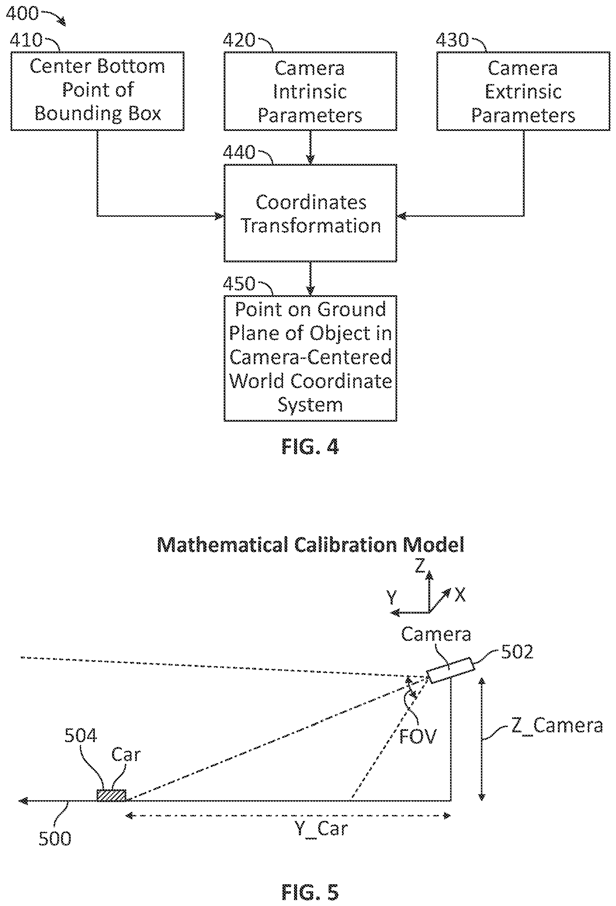

Referring to FIG. 4, embodiments for transforming sensor data (e.g., bounding box sizes and locations) into world coordinates will now be described. A process 400 combines inputs including image location of bounding boxes 410 (e.g., center bottom point of bounding box), camera intrinsic parameters 420 and camera extrinsic parameters 430. The inputs are provided to a coordinates transformation process 440, which outputs the object location (e.g., point on ground plane of object) in the camera centered world coordinate system 450. In some embodiments, the image coordinates are transformed using a pinhole camera model that describes a relationship between the projection onto the image plane and the three-dimensional space in the world.

The camera intrinsic parameters 420 may include information describing the configuration of the camera, such as a focal length, sensor format and principal point. The extrinsic parameters may include camera height, tilt angle and pan angle. In various embodiments, the tracking system tracks a single point location for each object (e.g., the center bottom point of the bounding box). It is observed that this point is likely to be the back or front of an object that is located on the ground plane.

FIG. 5 illustrates a calibration model assuming a flat ground plane in relation to extrinsic parameters of an image sensor, in accordance with one or more embodiments. As described herein, a tracking system may track moving objects in a traffic or security monitoring scene, for example, by transforming sensor input (e.g., from a thermal, visual, or other image sensor) to world coordinates. This transformation may be performed through a mathematical model that converts pixels in the image plane to points in Cartesian sensor-centered world coordinates using the sensor's intrinsic parameters and monitoring the sensor's extrinsic parameters. In embodiments, this mathematical calibration model may assume a flat ground plane in relation to the image sensor's extrinsic parameters (i.e., the orientation and position in the world). Such embodiments are illustrated in FIG. 5, illustrated flat ground plane 500, image sensor 502, and detected vehicle 504 (or other object).

In embodiments, a flat ground plane is not always the case, with the actual ground plane sloped in any direction, especially in hilly and mountainous areas. This discrepancy between reality and the mathematical model may lead to inaccurate tracking. For instance, discrepancies between reality and a flat ground plane model may cause the tracker to use incorrect location points in the Cartesian world, leading to a loss in accuracy of the tracking system in location, speed, and/or heading of tracked objects.

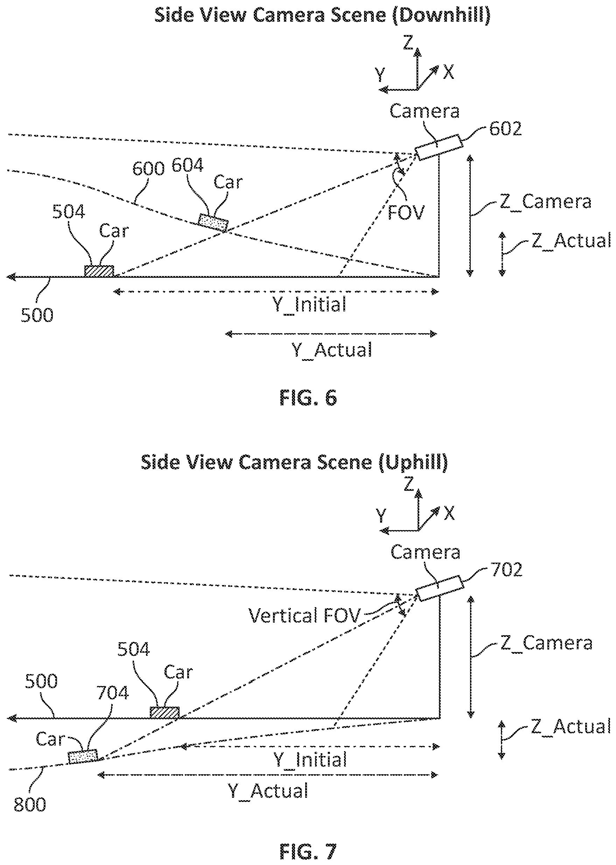

For example, FIGS. 6-7 illustrate discrepancies that may occur for downhill and uphill situations. FIG. 6 illustrates a comparison between an actual location of vehicle 604 and the vehicle location 504 determined by a flat ground plane calibration model for a downhill situation, in accordance with one or more embodiments. "Downhill" may refer to a situation where the actual ground plane 600 slopes downward toward an image sensor 602. As shown, the flat ground plane calibration model may determine a calculated position (e.g., "Y_initial, Z_initial") of vehicle 504 relative to image sensor 602, with Z_initial being zero. However, the actual position (e.g., "Y_actual, Z_actual") of vehicle 604 may be different, with Y_actual being less than Y_initial and Z_actual being greater than Z_initial for downhill situations.

FIG. 7 illustrates a comparison between the actual location of vehicle 704 and the vehicle location 504 determined by the flat ground plane calibration model for an uphill situation, in accordance with one or more embodiments. "Uphill" may refer to a situation where the actual ground plane 700 slopes upward toward image sensor 702. Similar to the downhill situation of FIG. 6, the actual position of vehicle 704 in FIG. 7 may be different than that calculated by the flat ground plane calibration model. For an uphill situation, Y_actual may be greater than Y_initial and Z_actual may be less than Z_initial.

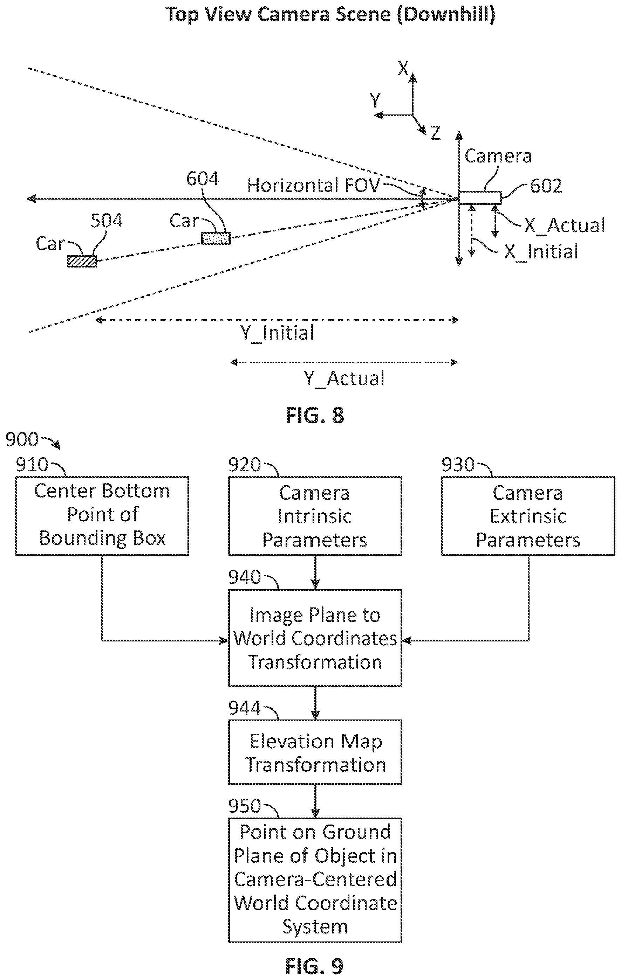

FIG. 8 illustrates a downhill situation similar to FIG. 6, but from a top view of the scene, in accordance with one or more embodiments. When vehicle is not in the middle of the horizontal field of view, an additional calibration may be needed. For example, X_actual may be less than X_initial. As a result, the difference in elevation height of where the vehicle is positioned has an impact on all parameters of the world coordinates (i.e., X, Y, and Z of the location of vehicle 604 or other tracked object in the world).

FIG. 9 illustrates a process of transforming sensor data into world coordinates using an elevation map, in accordance with one or more embodiments. Except as otherwise described below, process 900 may be similar to process 400 of FIG. 4, described above. For example, process 900 combines inputs including image location of bounding boxes 910 (e.g., center bottom point of bounding box), camera intrinsic parameters 920 and camera extrinsic parameters 930. The inputs are provided to a coordinates transformation process 940, which outputs flat ground plane coordinates of the object to an elevation map transformation process 944. Elevation map transformation process 944 may adjust the received flat ground plane coordinates to actual coordinates of the object, such as based on an elevation map. For example, elevation map transformation process 944 may output the object's true location (e.g., point on actual ground plane of object) in the camera-centered world coordinate system 950. In this manner, a coordinate transformation system may (1) transform an object location to first coordinates on a flat ground plane, and (2) transform the first coordinates to second coordinates on a non-flat ground plane, such as based at least in part on an elevation map of the scene.

The transformation process from world coordinates in the flat ground plane (X_initial, Y_initial, 0) to the non-flat ground plane (X_actual, Y_actual, Z_actual) may be achieved in many configurations. For example, the transformation process can be done by simply adding necessary offsets (e.g., "X_offset, Y_offset, Z_offset") to the initial coordinates: $\left({X}_{actual}, {Y}_{actual}, {Z}_{actual}\right) = \left({X}_{initial}, {Y}_{initial}, 0\right) + \left({X}_{offset}, {Y}_{offset}, {Z}_{offset}\right)$

In embodiments, the initial coordinates (X_initial, Y_initial, 0) may be obtained directly from the existing mathematical model. Because the ground plane is assumed initially to be flat, the Z-coordinate is always zero. The offset coordinates (X_offset, Y_offset, Z_offset) may be calculated as a function of X_initial, Y_initial, and an elevation map of the scene (e.g., "E_map): $\left({X}_{offset}, {Y}_{offset}, {Z}_{offset}\right) = f \left({X}_{initial}, {Y}_{initial}, {E}_{map}\right)$

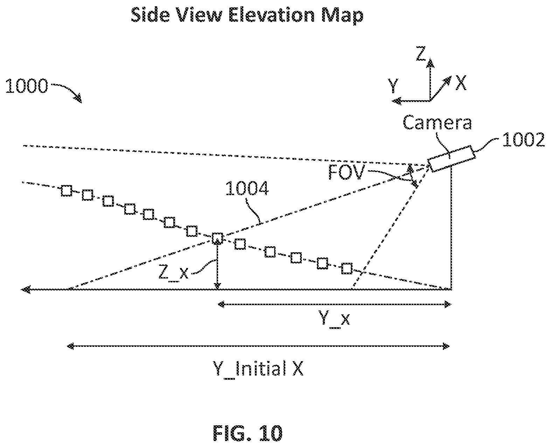

FIG. 10 illustrates an example elevation map 1000 of a scene, in accordance with one or more embodiments. As shown, elevation map 1000 may be described as a set of points (marked by boxes) with an elevation height (e.g., "Z_x) at a certain location in the scene (e.g., "X_x, Y_x"). Elevation map 1000 may be used to calculate the offset coordinates of all possible locations that the mathematical model provides for the scene.

In embodiments, the offset coordinates/values may be determined based on an intersection of a line projected from an image sensor 1002 to elevation map 1000. For example, for a given point (e.g., "X_x, Y_x, Z_x") in elevation map 1000, a line 1004 may be constructed between that point and the image sensor location (e.g., "0, 0, Z_camera"). The intersection between line 1004 and the flat ground plane (e.g., given by equation Z = 0) may provide an initial location on the flat ground plane (e.g., X_initial, Y_initial, 0) associated with the point (X_x, Y_x, Z_x) in elevation map. The difference between point (X_x, Y_x, Z_x) and initial location (X_initial, Y_initial, 0) is the offset. By doing this for all discrete points in elevation map 1000, an offset table of discrete points may be constructed. The offset table may be interpolated to calculate the offset coordinates (X_offset, Y_offset, Z_offset) for each initial location (X_initial, Y_initial, 0) provided by the mathematical model.

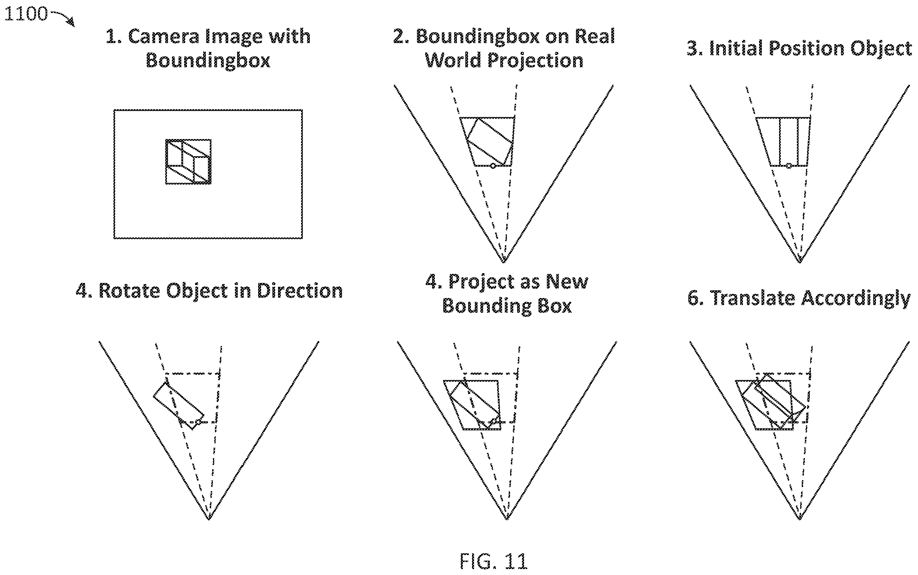

Referring to FIG. 11, an example process 1100 for transforming bounding boxes into three-dimensional images will now be described, in accordance with one or more embodiments. The camera receives an image with an object, which is fed into a trained CNN of the tracking system to determine an associated bounding box (step 1 in the example). As illustrated in step 2 of the example, the tracking system has identified a bounding box and a point of the object on the ground closest to the camera (original center bottom point of the bounding box). This point is tracked in the world coordinate system. By tracking this point, the trajectory and heading of the object is known to the tracking system. In various embodiments, this point will not exactly represent the center point of the object itself, depending on the angle of the trajectory compared the camera position and other factors. The goal in various embodiments is to estimate the exact ground plane of the object and estimate its length.

In one embodiment, the first step is to define the initial size of the object, and therefore ground plane of the object, in the world where the original tracked point is the center bottom point of the object. bounding box (step 3 in the example) The initial size of the object is chosen based on the class type of the object originally determined by the CNNs on the image sensors or by the radar sensor. After that the ground plane of the object is rotated based on the previous trajectory and heading of the object. (step 4 in the example). By projecting this ground plane of the object back to the original image sensor, this rotated ground plane will correspond to a new projected center bottom point of the projected bounding box. (step 5 in the example: new bounding box and dot). The translation is calculated between the original point and the newly projected point. This translation is now done in the opposite way to compensate for the angle of view as seen from the camera position. This will then correspond with the real ground plane of the object (step 6 in the example). The width, length, and height of the object is determined based on the class type determined by the CNNs on the image sensors and the radar sensor.

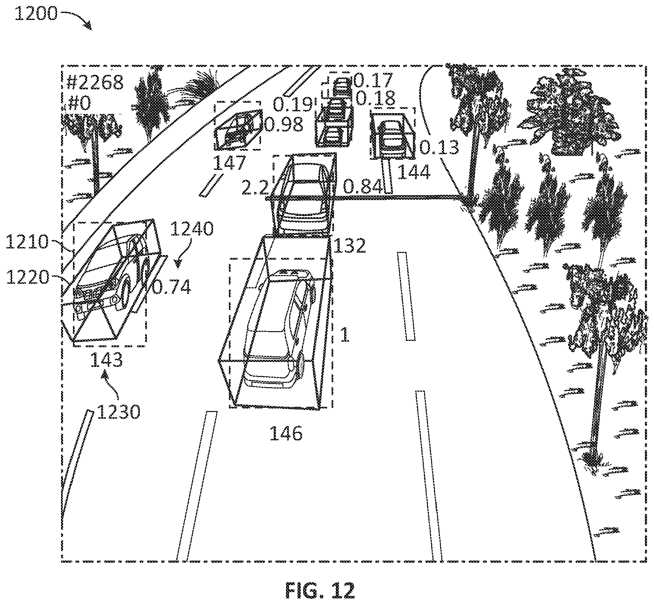

Referring to FIG. 12, an example image 1200 from a tracking system working with an image sensor (e.g., a thermal image sensor, a visual sensor, etc.) is illustrated. The 2D bounding boxes (as indicated by black rectangles, such as bounding box 1210) show the output from the CNN running on the thermal image, which may include a confidence factor 1240. The 3D bounding boxes (as indicated by white 3D wireframe boxes, such as 3D bounding box 1220) shows the estimated object volume by the tracking system, as converted back to the original image plane, and may include additional displayed information, such as an object identifier 1230. This image shows the camera-centered world coordinate system with the camera position in the center bottom location.

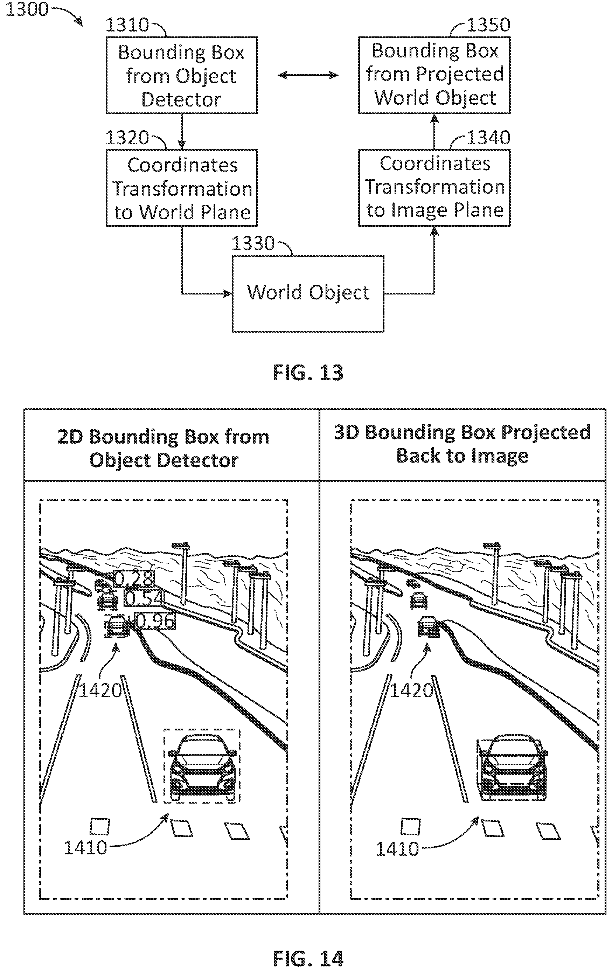

FIG. 13 illustrates a process 1300 of comparing an input bounding box from an object detector to a projected bounding box, in accordance with one or more embodiments. As described herein, acquisition of objects in the image plane may be done through an object detector, such as based on deep learning. In block 1310, the object detector may localize an object in an image with a bounding box (e.g., a first 2D bounding box) around the object. Block 1310 may also assign a certain classification of the object, such as whether the object is a person, motorcycle, car, truck, etc. In block 1320, the object's image coordinates may be transformed to Cartesian camera-centered world coordinates. Through this transformation, the object can be tracked in block 1330 based on a single point in world coordinates, as explained herein.

In block 1340, this single point may be transformed to a 3D object in the world by assigning an orientation (e.g., based on trajectory) and physical dimensions. For example, a 3D projection of the object may be created based on the object classification and an expected size of the object class. In block 1350, the 8 vertices of the 3D object can be projected back onto the image plane and a circumventing 2D bounding box (e.g., a second 2D bounding box) may be constructed based on the vertices of the 3D projection.

The input 2D bounding box from the object detector (e.g., the first 2D boundins box) and the projected circumventing 2D bounding box (e.g., the second 2D bounding box) may be directly compared. This comparison may provide information about whether the mathematical calibration model for transforming image locations to world coordinates is accurate. For example, when the projected size matches or closely matches with the original input bounding box, it indicates that the terrain height in relation to the mathematical calibration model lines up well. If the sizes do not match or closely match, however, two outcomes are possible. First, if the projected size is smaller, it may indicate that the mathematical calibration model projected the object too far in the world and it needs to bring the object closer towards the camera (e.g., the terrain height needs to be higher). If the projected size is larger, it indicates that the mathematical calibration model projected the object too close in the world and it needs to project the object further away from the camera (e.g., the terrain height needs to lower).

FIG. 14 illustrates example images of the input bounding box and the projected bounding box for comparison, in accordance with one or more embodiments. As shown, the input and projected bounding boxes of a first object 1410 close to the camera match quite well between the two images, indicating that the terrain height in relation to the first object 1410 lines up well in the model. Conversely, the input and projected bounding boxes of a second object 1420 further away from the camera do not match up well, with the projected bounding box of the second object 1420 projected onto the image plane much smaller than the input bounding box, indicating that the model projected the second object 1420 too far in the world and it needs to bring the second object 1420 closer towards the camera (e.g., the terrain height needs to be higher in relation to the second object).

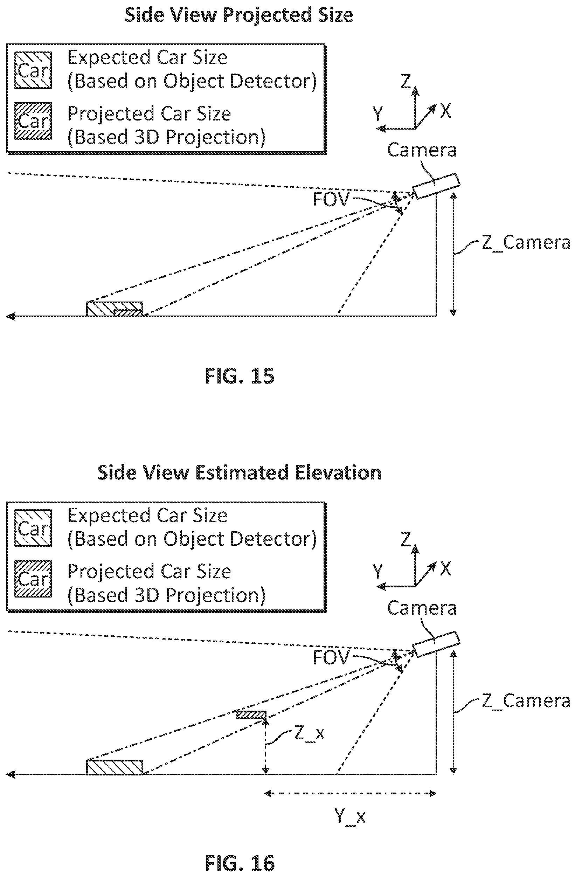

FIG. 15 illustrates a comparison between an expected size of a vehicle and a projected size of the vehicle, in accordance with one or more embodiments. FIG. 15 illustrates a situation where the projected size of the vehicle is too small. As shown, it is clear that the projected vehicle needs to be brought closer towards the camera to make the projected size match up closer to what is expected.

FIG. 16 illustrates the projection of the vehicle brought closer to the camera based on the comparison, in accordance with one or more embodiments. As illustrated, the projected vehicle is brought closer towards the camera at a distance Y_x from the camera and at a height Z_x. This height Z_x is therefore estimated as the terrain height at location Y_x in the elevation map. In this manner, the terrain height at a certain location may be increased based on the projected bounding box being smaller than the expected size. The converse can also be true. For instance, when the projected size of the vehicle (or other object) is larger than what is expected, the projected vehicle may be projected further away from the camera, with the terrain height (e.g., height Z_x) decreased. In embodiments, the terrain height can be found by an optimization process. For example, the terrain height output may be used on a second projection and the comparison repeated. In this manner, the process may iteratively adjust the terrain height until the projected size matches up with the original 2D detection.

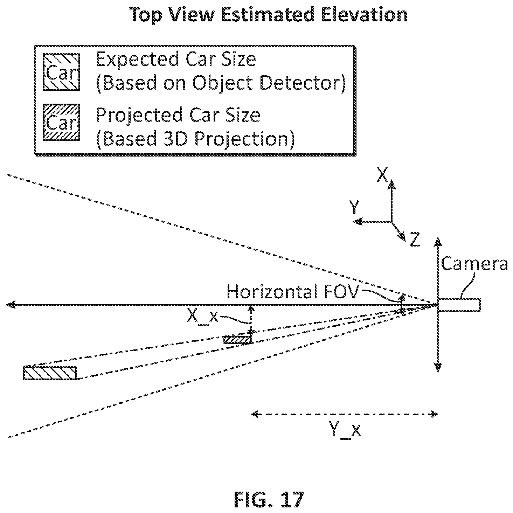

FIG. 17 illustrates the same comparison as FIG. 16, but from a top view of the scene, in accordance with one or more embodiments. Referring to FIG. 17, when the vehicle is not in the middle of the horizontal field of view, the vehicle's X location (e.g., X_x) may also need to be determined. In such embodiments, the estimated terrain height Z_x is located at location (X_x, Y_x).

In embodiments, the process of iteratively estimating the terrain height at a location (X, Y) may be extended for multiple locations in the scene. For example, the terrain height calculation may be performed multiple times on the same vehicle or object during its movement in the scene and/or for multiple different vehicles/objects. In this manner, the terrain height associated with a vehicle/object may be iteratively determined during trajectory of the vehicle/object in the scene. Additionally, or alternatively, the terrain height of multiple locations in the scene may be iteratively estimated. The multiple locations may be associated with the same or multiple vehicles/objects in the scene. In embodiments, this process may be restricted to specific object classes (e.g., persons, normal passenger vehicles, etc.) where the size distribution of those specific classes is narrow and can be estimated accurately.

In embodiments, the described processes can create a map (e.g., a 2D map) of the scene of estimated elevation/terrain heights. Because not every location in the scene may be visited by a tracked object, and/or because not all objects are the same dimensions (e.g., some differences in heights of people and dimensions of vehicles), the map can be smoothed and averaged to eliminate any gaps in the map and/or smooth out small errors.

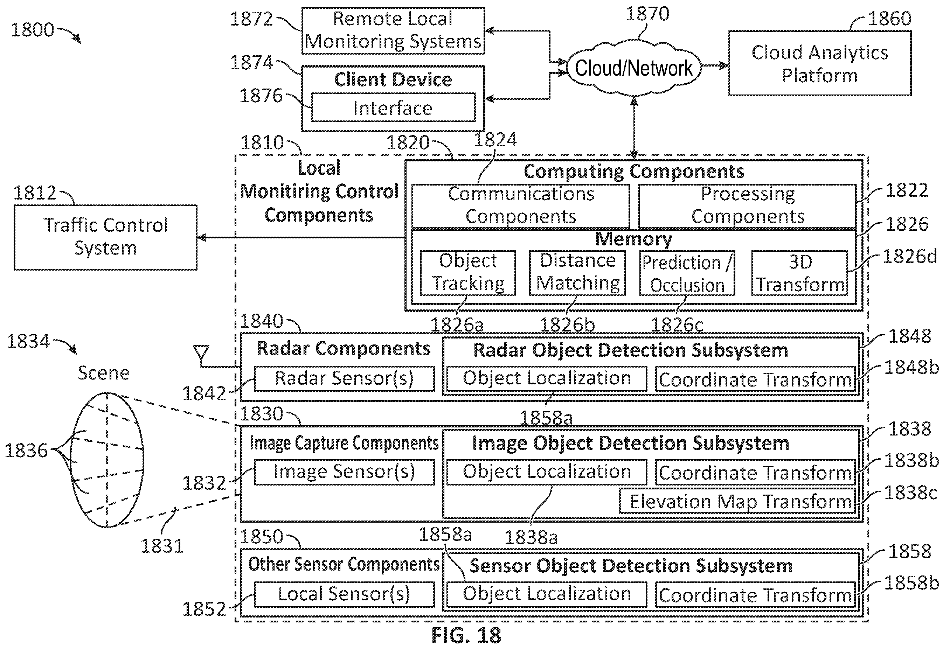

Referring to FIG. 18, an example intelligent transportation system implementing various aspects of the present disclosure will now be described in accordance with one or more embodiments. In some embodiments, an intelligent transportation system (ITS) 1800 includes local monitoring and control components 1810 for monitoring a traffic region and/or controlling a traffic control system 1812 associated with the traffic region (e.g., a system for controlling a traffic light at an intersection). The local monitoring and control components 1810 may be implemented in one or more devices associated with a monitored traffic area, and may include various processing and sensing components, including computing components 1820, image capture components 1830, radar components 1840, and/or other sensor components 1850.

The image capture components 1830 are configured to capture images (e.g., a stream of images) of a field of view 1831 of a traffic location (e.g., scene 1834 depicting a monitored traffic region). The image capture components 1830 may include infrared imaging (e.g., thermal imaging), visible spectrum imaging, and/or other imaging components. In some embodiments, the image capture components 1830 include an image object detection subsystem 1838 configured to process captured images in real-time to identify desired objects, such as vehicles, bicycles, pedestrians and/or other objects. In some embodiments, the image object detection subsystem 1838 can be configured through a web browser interface and/or software which is installed on a client device (e.g., remote client device 1874 with interface 1876 and/or another system communicably coupled to the image capture components 1830). The configuration may include defined detection zones 1836 within the scene 1834. When an object passes into a detection zone 1836, the image object detection subsystem 1838 detects and classifies the object. In a traffic monitoring system, the system may be configured to determine if an object is a pedestrian, bicycle or vehicle. If the object is a vehicle or other object of interest, further analysis may be performed on the object to determine a further classification of the object (e.g., vehicle type), such as based on shape, height, width, thermal properties and/or other detected characteristics.

In various embodiments, the image capture components 1830 include one or more image sensors 1832, which may include visible light, infrared, or other imaging sensors. The image object detection subsystem 1838 includes at least one object localization module 1838a, at least one coordinate transformation module 1838b, and at least one elevation map module 1838c. The object localization module 1838a is configured to detect an object in the captured image(s) and determine an object location of the object (e.g., image coordinates of the object). In embodiments, the object localization module 1838a may define a bounding box around the object. In some embodiments, the object localization module 1838a includes a trained neural network configured to output an identification of detected objects and associated bounding boxes, a classification for each detected object, and a confidence level for classification.

The coordinate transformation module 1838b transforms the object's location (e.g., image coordinates of each bounding box) to real-world coordinates associated with the imaging device. The coordinate transformation module 1838b transforms the object location in the image(s) to first coordinates on a flat ground plane. In addition, the coordinate transformation module 1838b transforms the first coordinates to second coordinates on a non-flat ground plane based at least in part on an elevation map of the scene 1134. Coordinate transformation module 1838b add offset values to the first coordinates to transform the first coordinates to the second coordinates. Coordinate transformation module 1838b determines the offset values based on an elevation map of scene 1134 based on an intersection of a line projected from image sensor(s) 1132 to the elevation map, as described above. In some embodiments, the image capture components 1130 include multiple cameras (e.g., a visible light camera and a thermal imaging camera) and corresponding object localization and coordinate transform modules.

The elevation map module 1838c determines an elevation map of scene 1134, which may provide a terrain height associated with each detected object to accurately represent the scene 1134 in 3D. In embodiments, elevation map module 1838c places a first 2D bounding box around each detected object in the stream of images, such as based on or in conjunction with the bounding box defined by object localization module 1838a. In embodiments, elevation map module 1838c may create a 3D projection of each detected object based on an object classification and an expected size of the object class. The 3D projection may be used to construct a second 2D bounding box (e.g., based on vertices of the 3D projection). The first 2D bounding box may be compared to the second 2D bounding box, and a terrain height associated with the object location may be determined based on the comparison. For example, the terrain height may be increased based on the second 2D bounding box being smaller than the first 2D bounding box, as described above. In addition, the terrain height may be decreased based on the second 2D bounding box being larger than the first 2D bounding box, as described above. The terrain height(s) may be determined iteratively, such as during trajectory of the object in scene 1134 and/or based on multiple objects/locations in scene 1134.

In various embodiments, the radar components 1840 include one or more radar sensors 1842 for generating radar data associated with all or part of the scene 1834. The radar components 1840 may include a radar transmitter, radar receiver, antenna and other components of a radar system. The radar components 1840 further include a radar object detection system 1848 configured to process the radar data for use by other components of the traffic control system. In various embodiments, the radar object detection subsystem 1848 includes at least one object localization module 1848a and at least one coordinate transformation module 1848b. The object localization module 1848a is configured to detect objects in the radar data and identify a location of the object with reference to the radar receiver, such as in the same manner described above with reference to object localization module 1838a. In some embodiments, the object localization module 1848a includes a trained neural network configured to output an identification of detected objects and associated location information, a classification for each detected object and/or object information (e.g., size of an object), and a confidence level for classification. The coordinate transformation module 1848b transforms the radar data to real-world coordinates associated with the image capture device (or another sensor system), such as in the same manner described above with reference to coordinate transformation module 1838b.

In various embodiments, the local monitoring and control components 1810 further include other sensor components, which may include feedback from other types of traffic sensors (e.g., a roadway loop sensor) and/or object sensors, which may include wireless systems, sonar systems, LiDAR systems, and/or other sensors and sensor systems. The other sensor components 1850 include local sensors 1852 for sensing traffic-related phenomena and generating associated data, and associated sensor object detection systems 1858, which includes object localization module 1858a, which may include a neural network configured to detect objects in the sensor data and output location information (e.g., a bounding box around a detected object), and a coordinate transformation module 1858b to transform the sensor data location to real-world coordinates associated with the image capture device (or other sensor system), such as in the same manner described above with reference to coordinate transformation module 1838b.

In some embodiments, the various sensor systems 1830, 1840 and 1850 are communicably coupled to the computing components 1820 and/or the traffic control system 1812 (such as an intersection controller). The computing components 1820 are configured to provide additional processing and facilitate communications between various components of the intelligent traffic system 1800. The computing components 1820 may include processing components 1822, communication components 1824 and a memory 1826, which may include program instructions for execution by the processing components 1822. For example, the computing components 1820 may be configured to process data received from the image capture components 1830, radar components 1840, and other sensing components 1850. The computing components 1820 may be configured to communicate with a cloud analytics platform 1860 or another networked server or system (e.g., remote local monitoring systems 1872) to transmit local data for further processing. The computing components 1820 may be further configured to receive processed traffic data associated with the scene 1834, traffic control system 1812, and/or other traffic control systems and local monitoring systems in the region. The computing components 1820 may be further configured to generate and/or receive traffic control signals for controlling the traffic control system 1812.

The computing components 1820 and other local monitoring and control components 1810 may be configured to combine local detection of pedestrians, cyclists, vehicles and other objects for input to the traffic control system 1812 with data collection that can be sent in real-time to a remote processing system (e.g., the cloud 1870) for analysis and integration into larger system operations.

In various embodiments, the memory 1826 stores program instructions to cause the processing components 1822 to perform the processes disclosed herein with reference to FIGS. 1-17. For example, the memory 1826 may include (i) an object tracking module 1826a configured to track objects through the real world space defined by one of the system components, and (ii) a 3D transformation module 1826b configured to define a 3D bounding box or other 3D description of each object in the real world space.

Any or all modules and components of intelligent traffic system 1800 may be implemented as any appropriate processing device, subsystem, microcontroller, processor, application specific integrated circuit (ASIC), field programmable gate array (FPGA), memory storage device, memory reader, or other device or combinations of devices. In embodiments, any or all modules and components of intelligent traffic system 1800 may be adapted to execute, store, and/or receive appropriate instructions, such as software instructions implementing a control loop for controlling various operations and/or other elements of system 1800. Such software instructions may also implement methods for performing any of the various operations described herein (e.g., operations performed by logic devices of various elements of system 1800).

Where applicable, various embodiments provided by the present disclosure can be implemented using hardware, software, or combinations of hardware and software. Also, where applicable, the various hardware components and/or software components set forth herein can be combined into composite components comprising software, hardware, and/or both without departing from the present disclosure. Where applicable, the various hardware components and/or software components set forth herein can be separated into sub-components comprising software, hardware, or both without departing from the present disclosure.

Software in accordance with the present disclosure, such as non-transitory instructions, program code, and/or data, can be stored on one or more non-transitory machine-readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein. Embodiments described above illustrate but do not limit the invention. Accordingly, the scope of the invention is defined only by the following claims.

## Claims

1. A system comprising:
an image sensor (1832) configured to capture a stream of images of a scene;
an object localization subsystem (1838a) configured to detect an object in the captured stream of images and determine an object location of the object in the stream of images; and
a coordinate transformation subsystem (1838b) configured to:
transform the object location of the object to first coordinates on a flat ground plane, and
transform the first coordinates to second coordinates on a non-flat ground plane based at least in part on an elevation map of the scene (1134), wherein to transform the first coordinates to the second coordinates, the coordinate transformation subsystem is configured to:
add offset values to the first coordinates to transform the first coordinates to the second coordinates, and
determine the offset values based on the elevation map of the scene, the offset values determined based on an intersection of a line projected from the image sensor to the elevation map.

2. The system of claim 1, further comprising an elevation map subsystem (1838c) configured to determine the elevation map of the scene, wherein the elevation map subsystem is configured to:
place a first two-dimensional, 2D, bounding box around the object in the stream of images;
create a three-dimensional, 3D, projection of the object based on an object classification and an expected size of the object class;
construct a second 2D bounding box based on vertices of the 3D projection;
compare the first 2D bounding box to the second 2D bounding box; and
determine a terrain height associated with the object location based on the comparing the first 2D bounding box to the second 2D bounding box.

3. The system of claim 2, wherein the elevation map subsystem is configured to:
increase the terrain height based on the second 2D bounding box being smaller than the first 2D bounding box; and/or
decrease the terrain height based on the second 2D bounding box being larger than the first 2D bounding box.

4. The system of claim 2, wherein the elevation map subsystem is configured to iteratively determine the terrain height associated with the object location during trajectory of the object in the scene.

5. The system of claim 1, further comprising an elevation map subsystem configured to determine the elevation map of the scene, wherein the elevation map subsystem is configured to iteratively estimate a terrain height of multiple locations in the scene, the multiple locations associated with multiple objects detected in the stream of images.

6. The system of claim 1, further comprising an object tracking subsystem (1826a) configured to track the object through the scene using the first coordinates and/or the second coordinates.

7. The system of claim 1, wherein the object localization subsystem comprises a deep learning process configured to:
receive captured images from the at least one sensor;
determine a bounding box surrounding the detected object; and
output a classification of the detected object including a confidence factor.

8. The system of claim 1, further comprising an elevation map subsystem configured to determine the elevation map of the scene, wherein the elevation map subsystem is configured to smooth and average the elevation map to eliminate gaps and reduce errors in the elevation map.

9. A method comprising:
capturing data associated with a scene using at least one sensor;
detecting an object in the captured data;
determining an object location of the object within the captured data;
transforming the object location to first coordinates on a flat ground plane; and
transforming the first coordinates to second coordinates on a non-flat ground plane based at least in part on an elevation map of the scene, wherein transforming the first coordinates to the second coordinates comprises:
adding offset values to the first coordinates to transform the first coordinates to the second coordinates, and
determining the offset values based on the elevation map of the scene, the offset values determined based on an intersection of a line projected from the image sensor to the elevation map.

10. The method of claim 9, further comprising determining the elevation map of the scene, wherein the determining the elevation map comprises:
placing a first two-dimensional, 2D, bounding box around the object based on the captured data;
creating a three-dimensional, 3D, projection of the object based on an object classification and an expected size of the object class;
constructing a second 2D bounding box based on vertices of the 3D projection;
comparing the first 2D bounding box to the second 2D bounding box; and
determining a terrain height associated with the object location based on the comparing the first 2D bounding box to the second 2D bounding box.

11. The method of claim 10, further comprising:
increasing the terrain height based on the second 2D bounding box being smaller than the first 2D bounding box; and/or
decreasing the terrain height based on the second 2D bounding box being larger than the first 2D bounding box.

12. The method of claim 10, further comprising iteratively determining the terrain height associated with the object location during trajectory of the object in the scene.

13. The method of claim 10, further comprising determining the elevation map of the scene, wherein the determining the elevation map comprises iteratively estimating a terrain height of multiple locations in the scene, the multiple locations associated with multiple objects detected in the captured data.

14. The method of claim 9, further comprising tracking the object through the scene using the first coordinates and/or the second coordinates, and wherein the determining the object location comprises a deep learning process comprising:
receiving captured data from the at least one sensor;
determining a bounding box surrounding the detected object; and
outputting a classification of the detected object including a confidence factor.

15. The method of claim 9, further comprising determining, using an elevation map subsystem, the elevation map of the scene, wherein determining the elevation map comprises smoothing and averaging the elevation map to eliminate gaps and reduce errors in the elevation map.

## Patentansprüche

1. Ein System, das Folgendes beinhaltet:
einen Bildsensor (1832), der konfiguriert ist, um einen Strom von Bildern einer Szene aufzunehmen;
ein Objektlokalisierungssubsystem (1838a), das konfiguriert ist, um ein Objekt in dem aufgenommenen Strom von Bildern zu erkennen und eine Objektposition des Objekts in dem Strom von Bildern zu bestimmen; und
ein Koordinatentransformationssubsystem (1838b), das für Folgendes konfiguriert ist:
Transformieren der Objektposition des Objekts in erste Koordinaten auf einer flachen Bodenebene, und
Transformieren der ersten Koordinaten in zweite Koordinaten auf einer nicht flachen Bodenebene zumindest teilweise basierend auf einer Höhenkarte der Szene (1134), wobei das Koordinatentransformationssubsystem zum Transformieren der ersten Koordinaten in die zweiten Koordinaten für Folgendes konfiguriert ist:
Hinzufügen von Versatzwerten zu den ersten Koordinaten, um die ersten Koordinaten in die zweiten Koordinaten zu transformieren, und
Bestimmen der Versatzwerte basierend auf der Höhenkarte der Szene, wobei die Versatzwerte basierend auf einem Schnittpunkt einer Linie bestimmt werden, die von dem Bildsensor auf die Höhenkarte projiziert wird.

2. System gemäß Anspruch 1, das ferner ein Höhenkartensubsystem (1838c) beinhaltet, das konfiguriert ist, um die Höhenkarte der Szene zu bestimmen, wobei das Höhenkartensubsystem für Folgendes konfiguriert ist:
Platzieren eines ersten zweidimensionalen, 2D-, Begrenzungsrahmens um das Objekt in dem Strom von Bildern;
Erstellen einer dreidimensionalen, 3D-, Projektion des Objekts basierend auf einer Objektklassifizierung und einer erwarteten Größe der Objektklasse;
Konstruieren eines zweiten 2D-Begrenzungsrahmens basierend auf Scheitelpunkten der 3D-Projektion;
Vergleichen des ersten 2D-Begrenzungsrahmens mit dem zweiten 2D-Begrenzungsrahmen; und
Bestimmen einer Geländehöhe, die mit der Objektposition assoziiert ist, basierend auf dem Vergleichen des ersten 2D-Begrenzungsrahmens mit dem zweiten 2D-Begrenzungsrahmen.

3. System gemäß Anspruch 2, wobei das Höhenkartensubsystem für Folgendes konfiguriert ist:
Erhöhen der Geländehöhe basierend darauf, dass der zweite 2D-Begrenzungsrahmen kleiner als der erste 2D-Begrenzungsrahmen ist; und/oder
Verringern der Geländehöhe basierend darauf, dass der zweite 2D-Begrenzungsrahmen größer als der erste 2D-Begrenzungsrahmen ist.

4. System gemäß Anspruch 2, wobei das Höhenkartensubsystem konfiguriert ist, um die Geländehöhe, die mit der Objektposition assoziiert ist, während einer Trajektorie des Objekts in der Szene iterativ zu bestimmen.

5. System gemäß Anspruch 1, das ferner ein Höhenkartensubsystem beinhaltet, das konfiguriert ist, um die Höhenkarte der Szene zu bestimmen, wobei das Höhenkartensubsystem konfiguriert ist, um eine Geländehöhe für mehrere Positionen in der Szene iterativ zu schätzen, wobei die mehreren Positionen mit mehreren Objekten assoziiert sind, die in dem Strom von Bildern erkannt werden.

6. System gemäß Anspruch 1, das ferner ein Objektverfolgungssubsystem (1826a) beinhaltet, das konfiguriert ist, um das Objekt durch die Szene unter Verwendung der ersten Koordinaten und/oder der zweiten Koordinaten zu verfolgen.

7. System gemäß Anspruch 1, wobei das Objektlokalisierungssubsystem einen Deep-Learning-Prozess beinhaltet, der für Folgendes konfiguriert ist:
Empfangen aufgenommener Bilder von dem mindestens einen Sensor;
Bestimmen eines Begrenzungsrahmens, der das erkannte Objekt umgibt; und
Ausgeben einer Klassifizierung des erkannten Objekts, die einen Konfidenzfaktor umfasst.

8. System gemäß Anspruch 1, das ferner ein Höhenkartensubsystem beinhaltet, das konfiguriert ist, um die Höhenkarte der Szene zu bestimmen, wobei das Höhenkartensubsystem konfiguriert ist, um die Höhenkarte zu glätten und zu mitteln, um Lücken zu beseitigen und Fehler in der Höhenkarte zu reduzieren.

9. Ein Verfahren, das Folgendes beinhaltet:
Aufnehmen von mit einer Szene assoziierten Daten unter Verwendung mindestens eines Sensors;
Erkennen eines Objekts in den aufgenommenen Daten;
Bestimmen einer Objektposition des Objekts innerhalb der aufgenommenen Daten;
Transformieren der Objektposition in erste Koordinaten auf einer flachen Bodenebene; und
Transformieren der ersten Koordinaten in zweite Koordinaten auf einer nicht flachen Bodenebene zumindest teilweise basierend auf einer Höhenkarte der Szene, wobei das Transformieren der ersten Koordinaten in die zweiten Koordinaten Folgendes beinhaltet:
Hinzufügen von Versatzwerten zu den ersten Koordinaten, um die ersten Koordinaten in die zweiten Koordinaten zu transformieren, und
Bestimmen der Versatzwerte basierend auf der Höhenkarte der Szene, wobei die Versatzwerte basierend auf einem Schnittpunkt einer Linie bestimmt werden, die von dem Bildsensor auf die Höhenkarte projiziert wird.

10. Verfahren gemäß Anspruch 9, das ferner das Bestimmen der Höhenkarte der Szene beinhaltet, wobei das Bestimmen der Höhenkarte Folgendes beinhaltet:
Platzieren eines ersten zweidimensionalen, 2D-, Begrenzungsrahmens um das Objekt basierend auf den aufgenommenen Daten;
Erstellen einer dreidimensionalen, 3D-, Projektion des Objekts basierend auf einer Objektklassifizierung und einer erwarteten Größe der Objektklasse;
Konstruieren eines zweiten 2D-Begrenzungsrahmens basierend auf Scheitelpunkten der 3D-Projektion;
Vergleichen des ersten 2D-Begrenzungsrahmens mit dem zweiten 2D-Begrenzungsrahmen; und
Bestimmen einer Geländehöhe, die mit der Objektposition assoziiert ist, basierend auf dem Vergleichen des ersten 2D-Begrenzungsrahmens mit dem zweiten 2D-Begrenzungsrahmen.

11. Verfahren gemäß Anspruch 10, das ferner Folgendes beinhaltet:
Erhöhen der Geländehöhe basierend darauf, dass der zweite 2D-Begrenzungsrahmen kleiner als der erste 2D-Begrenzungsrahmen ist; und/oder
Verringern der Geländehöhe basierend darauf, dass der zweite 2D-Begrenzungsrahmen größer als der erste 2D-Begrenzungsrahmen ist.

12. Verfahren gemäß Anspruch 10, das ferner das iterative Bestimmen der Geländehöhe, die mit der Objektposition assoziiert ist, während einer Trajektorie des Objekts in der Szene beinhaltet.

13. Verfahren gemäß Anspruch 10, das ferner das Bestimmen der Höhenkarte der Szene beinhaltet, wobei das Bestimmen der Höhenkarte das iterative Schätzen einer Geländehöhe für mehrere Positionen in der Szene beinhaltet, wobei die mehreren Positionen mit mehreren Objekten assoziiert sind, die in den aufgenommenen Daten erkannt werden.

14. Verfahren gemäß Anspruch 9, das ferner das Verfolgen des Objekts durch die Szene unter Verwendung der ersten Koordinaten und/oder der zweiten Koordinaten beinhaltet und wobei das Bestimmen der Objektposition einen Deep-Learning-Prozess beinhaltet, der Folgendes beinhaltet:
Empfangen aufgenommener Daten von dem mindestens einen Sensor;
Bestimmen eines Begrenzungsrahmens, der das erkannte Objekt umgibt; und
Ausgeben einer Klassifizierung des erkannten Objekts, die einen Konfidenzfaktor umfasst.

15. Verfahren gemäß Anspruch 9, das ferner das Bestimmen der Höhenkarte der Szene unter Verwendung eines Höhenkartensubsystems beinhaltet, wobei das Bestimmen der Höhenkarte das Glätten und Mitteln der Höhenkarte beinhaltet, um Lücken zu beseitigen und Fehler in der Höhenkarte zu reduzieren.

## Revendications

1. Un système comprenant :
un capteur d'images (1832) configuré pour capturer un flux d'images d'une scène ;
un sous-système de localisation d'objet (1838a) configuré pour détecter un objet dans le flux d'images capturé et déterminer un emplacement d'objet de l'objet dans le flux d'images ; et
un sous-système de transformation de coordonnées (1838b) configuré pour :
transformer l'emplacement d'objet de l'objet en de premières coordonnées sur un plan de sol plat, et
transformer les premières coordonnées en de deuxièmes coordonnées sur un plan de sol non plat sur la base au moins en partie d'une carte d'élévation de la scène (1134), dans lequel, afin de transformer les premières coordonnées en les deuxièmes coordonnées, le sous-système de transformation de coordonnées est configuré pour :
ajouter des valeurs de décalage aux premières coordonnées afin de transformer les premières coordonnées en les deuxièmes coordonnées, et
déterminer les valeurs de décalage sur la base de la carte d'élévation de la scène, les valeurs de décalage étant déterminées sur la base d'une intersection d'une ligne projetée depuis le capteur d'images jusqu'à la carte d'élévation.

2. Le système de la revendication 1, comprenant en outre un sous-système de carte d'élévation (1838c) configuré pour déterminer la carte d'élévation de la scène, dans lequel le sous-système de carte d'élévation est configuré pour :
placer une première boîte englobante bidimensionnelle, 2D, autour de l'objet dans le flux d'images ;
créer une projection tridimensionnelle, 3D, de l'objet sur la base d'une classification d'objet et d'une taille attendue de la classe d'objet ;
construire une deuxième boîte englobante 2D sur la base de sommets de la projection 3D ;
comparer la première boîte englobante 2D à la deuxième boîte englobante 2D ; et déterminer une hauteur de terrain associée à l'emplacement d'objet sur la base de la comparaison de la première boîte englobante 2D à la deuxième boîte englobante 2D.

3. Le système de la revendication 2, dans lequel le sous-système de carte d'élévation est configuré pour :
augmenter la hauteur de terrain sur la base du fait que la deuxième boîte englobante 2D est plus petite que la première boîte englobante 2D ; et/ou diminuer la hauteur de terrain sur la base du fait que la deuxième boîte englobante 2D est plus grande que la première boîte englobante 2D.

4. Le système de la revendication 2, dans lequel le sous-système de carte d'élévation est configuré pour déterminer de manière itérative la hauteur de terrain associée à l'emplacement d'objet durant la trajectoire de l'objet dans la scène.

5. Le système de la revendication 1, comprenant en outre un sous-système de carte d'élévation configuré pour déterminer la carte d'élévation de la scène, dans lequel le sous-système de carte d'élévation est configuré pour estimer de manière itérative une hauteur de terrain de multiples emplacements dans la scène, les multiples emplacements étant associés à de multiples objets détectés dans le flux d'images.

6. Le système de la revendication 1, comprenant en outre un sous-système de suivi d'objet (1826a) configuré pour suivre l'objet à travers la scène à l'aide des premières coordonnées et/ou des deuxièmes coordonnées.

7. Le système de la revendication 1, dans lequel le sous-système de localisation d'objet comprend un processus d'apprentissage profond configuré pour :
recevoir des images capturées en provenance de l'au moins un capteur ;
déterminer une boîte englobante entourant l'objet détecté ; et
émettre en sortie une classification de l'objet détecté incluant un facteur de confiance.

8. Le système de la revendication 1, comprenant en outre un sous-système de carte d'élévation configuré pour déterminer la carte d'élévation de la scène, dans lequel le sous-système de carte d'élévation est configuré pour lisser et moyenner la carte d'élévation afin d'éliminer les écarts et de réduire les erreurs dans la carte d'élévation.

9. Un procédé comprenant :
le fait de capturer des données associées à une scène à l'aide d'au moins un capteur ;
le fait de détecter un objet dans les données capturées ;
le fait de déterminer un emplacement d'objet de l'objet au sein des données capturées ;
le fait de transformer l'emplacement d'objet en de premières coordonnées sur un plan de sol plat ; et
le fait de transformer les premières coordonnées en de deuxièmes coordonnées sur un plan de sol non plat sur la base au moins en partie d'une carte d'élévation de la scène, dans lequel le fait de transformer les premières coordonnées en les deuxièmes coordonnées comprend :
le fait d'ajouter des valeurs de décalage aux premières coordonnées afin de transformer les premières coordonnées en les deuxièmes coordonnées, et
le fait de déterminer les valeurs de décalage sur la base de la carte d'élévation de la scène, les valeurs de décalage étant déterminées sur la base d'une intersection d'une ligne projetée depuis le capteur d'images jusqu'à la carte d'élévation.

10. Le procédé de la revendication 9, comprenant en outre le fait de déterminer la carte d'élévation de la scène, dans lequel le fait de déterminer la carte d'élévation comprend :
le fait de placer une première boîte englobante bidimensionnelle, 2D, autour de l'objet sur la base des données capturées ;
le fait de créer une projection tridimensionnelle, 3D, de l'objet sur la base d'une classification d'objet et d'une taille attendue de la classe d'objet ;
le fait de construire une deuxième boîte englobante 2D sur la base de sommets de la projection 3D ;
le fait de comparer la première boîte englobante 2D à la deuxième boîte englobante 2D ; et
le fait de déterminer une hauteur de terrain associée à l'emplacement d'objet sur la base de la comparaison de la première boîte englobante 2D à la deuxième boîte englobante 2D.

11. Le procédé de la revendication 10, comprenant en outre :
le fait d'augmenter la hauteur de terrain sur la base du fait que la deuxième boîte englobante 2D est plus petite que la première boîte englobante 2D ; et/ou
le fait de diminuer la hauteur de terrain sur la base du fait que la deuxième boîte englobante 2D est plus grande que la première boîte englobante 2D.

12. Le procédé de la revendication 10, comprenant en outre le fait de déterminer de manière itérative la hauteur de terrain associée à l'emplacement d'objet durant la trajectoire de l'objet dans la scène.

13. Le procédé de la revendication 10, comprenant en outre le fait de déterminer la carte d'élévation de la scène, dans lequel le fait de déterminer la carte d'élévation comprend le fait d'estimer de manière itérative une hauteur de terrain de multiples emplacements dans la scène, les multiples emplacements étant associés à de multiples objets détectés dans les données capturées.

14. Le procédé de la revendication 9, comprenant en outre le fait de suivre l'objet à travers la scène à l'aide des premières coordonnées et/ou des deuxièmes coordonnées, et dans lequel le fait de déterminer l'emplacement d'objet comprend un processus d'apprentissage profond comprenant :
le fait de recevoir des données capturées en provenance de l'au moins un capteur ;
le fait de déterminer une boîte englobante entourant l'objet détecté ; et
le fait d'émettre en sortie une classification de l'objet détecté incluant un facteur de confiance.

15. Le procédé de la revendication 9, comprenant en outre le fait de déterminer, à l'aide d'un sous-système de carte d'élévation, la carte d'élévation de la scène, dans lequel le fait de déterminer la carte d'élévation comprend le fait de lisser et de moyenner la carte d'élévation afin d'éliminer les écarts et de réduire les erreurs dans la carte d'élévation.
